# EUROPEAN PATENT APPLICATION

(11) **EP 1 091 542 A1**
(43) Date of publication of application: **11.04.2001**
(21) Application number: 99610059.0
(22) Date of filing: 08.10.1999
(51) Int. Cl.: H04M 1/72

(54) **Method, System and accessory device for integration of cellular telephone and audio playback device**

(71) Applicant: TELEFONAKTIEBOLAGET LM ERICSSON (publ), 126 25 Stockholm (SE)
(72) Inventor: Borgström, Anders, 239 32 Skanör (SE); Hollström, Magnus, 226 49 Lund (SE)
(74) Representative: Boesen, Johnny Peder

(57) **Abstract**

A method of using a cellular telephone (2) connectable to at least one sound reproducing unit (10) for playback of audio signals comprises the steps of downloading a digitized and compressed audio file from the Internet (12) to a computer (3), transferring the compressed audio file from the computer (3) to a portable storage medium (7), connecting an accessory device (8) to the telephone (2), inserting the portable storage medium (7) into the accessory device (8), decompressing the digitized and compressed audio file in the accessory device (8), playing back the decompressed audio file as audibly perceptible signals via the sound reproducing unit (10), reducing during telephone calls the sound level of the audibly perceptible signals, and using the sound reproducing unit (10) for the telephone conversation. Thus, a user can listen to signals from audio files or use the cellular telephone without having to carry more than one device.

## Description

The invention relates to a method of using a cellular telephone connectable to at least one sound reproducing unit for playback of audio signals. The invention further relates to a system for playback of audio signals, and an accessory device for use in connection with a cellular telephone.

Portable playback devices for use with e.g. audio cassettes or compact discs (CD's) have been known for many years and are widely used, because they allow a user to listen to music or other audio information at any place and during transport.

Today, different methods of compressing digitized audio signals significantly are also known, and this situation has led to the fact that portable storage mediums, such as memory cards, of even limited size can store a considerable amount of audio information. Therefore, also portable playback devices for such storage mediums have been made available. As an example, portable playback devices for audio files in MP3 format may be mentioned.

US 5 841 979 discloses a portable digital audio storage and playback apparatus for reception, storage, D/A conversion and playback of digitized and compressed audio files. The compressed audio files may be received at a transfer rate that is at least two times the normal audible playback rate. A similar apparatus is known from US 5 914 941, which mentions that program material can be obtained either through a digital data storage cartridge, which may be removable, or through electronic data transfer from cable TV or similar sources.

However, these devices are designed to be used exclusively for playback of audio information. Many users have a need for other functions which these devices are not able to fulfil, and, thus, these users have to carry additional devices in order to have their needs fulfilled.

It is also known, e.g. from WO 99/03294, to share a common headset between a radio telephone and an audio device, such that the headset is used for telephone conversation when the telephone is active, and switched to the audio device when the telephone is not active. The audio device and the telephone may also share a common housing as a single device, which is easier and lighter to carry than two individual devices separately. However, the audio device is either a receiver for public audio broadcast programs, or it is a compact disc player or a cassette player. Thus, this device does not provide the possibility to play back compressed digitized audio files as described above.

Thus, it is an object of the invention to provide a method of using a cellular telephone for playback of audio signals, in which the user can listen to audio signals from compressed digitized audio files or use the cellular telephone without having to carry more than one device.

According to the invention, this is achieved in that the method comprises the steps of downloading a digitized and compressed audio file from the Internet to a computer, transferring the digitized and compressed audio file from the computer to a portable storage medium, connecting an accessory device to the cellular telephone, inserting the portable storage medium into the accessory device, decompressing the digitized and compressed audio file in the accessory device, playing back the decompressed audio file as audibly perceptible signals via the sound reproducing unit, reducing during telephone calls the sound level of the audibly perceptible signals which are played back from said audio file, and using the sound reproducing unit for the telephone conversation.

Transferring the digitized and compressed audio file to a portable storage medium which can be inserted into the accessory device, allows a solution which is very comfortable in use, because the user can easily carry several portable storage mediums as these will typically be small in size. Further, using the same sound reproducing unit, which could typically be a headset, for the audio playback and the telephone, the user obtains both functions while carrying only one single device. By using an accessory device which can be connected to the cellular telephone, a solution is obtained which can be used with an ordinary standard cellular telephone, thus avoiding the need for a cellular telephone specially designed for this purpose.

An expedient embodiment of the invention is obtained, as stated in claim 2, when the cellular telephone is a GSM telephone, because the GSM system is widely used in many countries around the world. Similarly, the MP3 format is today widely used around the world for the compression of audio files, and, therefore, it is very expedient when, as stated in claim 3, the digitized and compressed audio file is compressed in the MP3 format.

As stated in claim 4, the portable storage medium may be a Multi-Media Card (MMC).

As an alternative to downloading the digitized and compressed audio file from the Internet to the computer, the digitized and compressed audio file may be generated in the computer, as is stated in claim 5. When, as stated in claim 6, the generation of the digitized and compressed audio file in the computer comprises the steps of reading audio signals in CD format from an audio CD, and converting in the computer the audio signals from the CD format to the compressed format, an expedient embodiment is obtained, because a very large selection of CD's is available to most users. Further embodiments are obtained, as stated in claims 7 and 8, when the digitized and compressed audio file is compressed in the MP3 format, and the portable storage medium is a Multi-Media Card (MMC).

As mentioned, the invention further relates to a system for playback of audio signals. When the system comprises a computer; means for downloading a digitized and compressed audio file from the Internet to the computer; a portable storage medium; means for transferring the digitized and compressed audio file from the computer to the portable storage medium; a cellular telephone connectable to at least one sound reproducing unit; and an accessory device connectable to the cellular telephone and comprising means for inserting the portable storage medium, means for decompressing the digitized and compressed audio file, means for playing back the decompressed audio file as audibly perceptible signals via the sound reproducing unit, and means for reducing during telephone calls the sound level of the audibly perceptible signals which are played back from said audio file, and using the sound reproducing unit for the telephone conversation, the same advantages are obtained as mentioned for the method above. As an alternative to downloading the digitized and compressed audio file from the Internet to the computer, the digitized and compressed audio file may be generated in the computer, as is stated in claim 10.

As mentioned, the invention further relates to an accessory device for use in connection with a cellular telephone connectable to at least one sound reproducing unit for playback of audio signals. When the accessory device comprises means for inserting a portable storage medium on which a digitized and compressed audio file is stored, means for decompressing the digitized and compressed audio file, means for playing back the decompressed audio file as audibly perceptible signals via the sound reproducing unit, and means for reducing during telephone calls the sound level of the audibly perceptible signals which are played back from said audio file, and using the sound reproducing unit for the telephone conversation, the same advantages are obtained as mentioned for the method above.

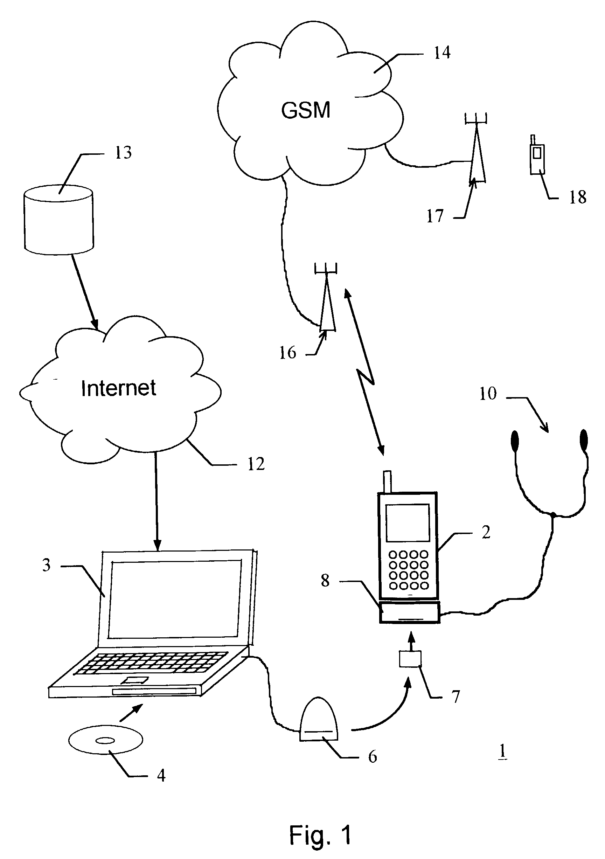

The invention will now be described more fully below with reference to the drawing, in which
figure 1 shows an embodiment of the invention.

Figure 1 shows an example of a system 1 for providing a cellular telephone 2 with a combination of portable handsfree and hi-fi audio stereo playback according to the invention. In the example, the telephone 2 is a GSM phone, and through its built-in antenna it communicates with a GSM base station 16 connected to a GSM network 14. Just for illustration it is shown that also other base stations, such as the base station 17, and other GSM phones, such as the phone 18, are connected to the network 14. Thus, the telephone 2 can be used as any other normal GSM phone for two-way communication with other telephones.

In the figure it is seen that an accessory device in the form of a plug-in device 8 is connected to the phone 2 galvanically at the bottom end of the phone. A sound reproducing unit in the form of a headset 10 is connected to the accessory device 8, but it could just as well be connected directly to the telephone 2. Further, the device 8 has a slot for insertion of a portable storage medium in the form of a memory card or Multi-Media Card 7 on which digitized and compressed audio files are stored, e.g. in MP3 format. The accessory device 8 is adapted to decompress or decode the compressed audio files and playback the resulting audio signals through the headset 10.

If audio contents (e.g. music) are played in the headset and an incoming call appears, the audio playback will be halted or softened, i.e. the sound level reduced, while the conversation is going on. The speech signals received during the conversation are now reproduced in the headset that was used before the call for playback of the audio files stored on the card 7. When the conversation is finished, the audio playback is resumed.

The accessory device 8 also consists of control and monitoring electronics, but it has no Man Machine Interface (MMI), because this part is taken care of by the telephone (display and keyboard) by e.g. using so-called dynamic menues. The phone 2 and the accessory device 8 have an active communication on a serial link. The accessory device 8 can drive most hi-fi headsets on the market, and it also allows routing of a microphone signal for the uplink voice path as well as downlink voice to the headset from the GSM network.

As mentioned, the MP3 audio files are delivered to the accessory device 8 via e.g. a Multi-Media Card that is inserted in a slot in the accessory device 8. An MMC of today may have 32 Mbytes of flash memory, which corresponds to about 30 minutes of hi-fi music or several hours of high quality voice audio.

The figure also shows how to get the compressed audio files into the card 7. A dedicated server 13 belonging to a service provider of compressed audio files is connected to the Internet 12, and the audio content is downloaded from the Internet via reasonably fast, wired link to a personal computer 3. From the computer 3 it is handed over to the card 7 via an adapter 6 using a normal drag-and-drop manoeuvre on the screen of the personal computer. Alternatively, the content can be automatically transferred from the network and onto the card. The personal computer is connected to the Internet via a normal modem or a faster Ethernet line.

The compressed audio files can also be generated in the personal computer without being downloaded from the Internet. As shown, a compact disc 4 may be inserted into a slot in the computer, and the MP3 content is then obtained by converting from CD format in the personal computer 3 by means of special software. This process is also known as "ripping".

The adapter 6 is any MMC adapter on the market and it can be connected to the personal computer through an RS-232 port, a diskette port, a PC card port, a parallel port or an USB port.

In the example the telephone and the corresponding network are of GSM type, but of course any other cellular system (e.g. WCDMA) may be used as well.

Although a preferred embodiment of the present invention has been described and shown, the invention is not restricted to it, but may also be embodied in other ways within the scope of the subject-matter defined in the following claims.

## Claims

1. A method of using a cellular telephone (2) connectable to at least one sound reproducing unit (10) for playback of audio signals, the method comprising the steps of:
• downloading a digitized and compressed audio file from the Internet (12) to a computer (3),
• transferring the digitized and compressed audio file from the computer (3) to a portable storage medium (7),
• connecting an accessory device (8) to the cellular telephone (2),
• inserting the portable storage medium (7) into the accessory device (8),
• decompressing the digitized and compressed audio file in the accessory device (8),
• playing back the decompressed audio file as audibly perceptible signals via the sound reproducing unit (10),
• reducing during telephone calls the sound level of the audibly perceptible signals which are played back from said audio file, and using the sound reproducing unit (10) for the telephone conversation.

2. A method according to claim 1, **characterized** in that the cellular telephone (2) is a GSM telephone.

3. A method according to claim 1 or 2, **characterized** in that the digitized and compressed audio file is compressed in the MP3 format.

4. A method according to claims 1-3, **characterized** in that the portable storage medium (7) is a Multi-Media Card (MMC).

5. A method of using a cellular telephone (2) connectable to at least one sound reproducing unit (10) for playback of audio signals, the method comprising the steps of:
• generating a digitized and compressed audio file in a computer (3),
• transferring the digitized and compressed audio file from the computer (3) to a portable storage medium (7),
• connecting an accessory device (8) to the cellular telephone (2),
• inserting the portable storage medium (7) into the accessory device (8),
• decompressing the digitized and compressed audio file in the accessory device (8),
• playing back the decompressed audio file as audibly perceptible signals via the sound reproducing unit (10),
• reducing during telephone calls the sound level of the audibly perceptible signals which are played back from said audio file, and using the sound reproducing unit (10) for the telephone conversation.

6. A method according to claim 5, **characterized** in that the generation of the digitized and compressed audio file in the computer (3) comprises the steps of:
• reading audio signals in CD format from an audio CD (4), and
• converting in the computer (3) the audio signals from the CD format to the compressed format.

7. A method according to claim 5 or 6, **characterized** in that the digitized and compressed audio file is compressed in the MP3 format.

8. A method according to claims 5-7, **characterized** in that the portable storage medium (7) is a Multi-Media Card (MMC).

9. A system for playback of audio signals, comprising:
• a computer (3),
• means for downloading a digitized and compressed audio file from the Internet (12) to the computer (3),
• a portable storage medium (7),
• means for transferring the digitized and compressed audio file from the computer (3) to the portable storage medium (7),
• a cellular telephone (2) connectable to at least one sound reproducing unit (10), and
• an accessory device (8) connectable to the cellular telephone (2) and comprising
• means for inserting the portable storage medium (7),
• means for decompressing the digitized and compressed audio file,
• means for playing back the decompressed audio file as audibly perceptible signals via the sound reproducing unit (10), and
• means for reducing during telephone calls the sound level of the audibly perceptible signals which are played back from said audio file, and using the sound reproducing unit (10) for the telephone conversation.

10. A system for playback of audio signals, comprising:
• a computer (3),
• means for generating a digitized and compressed audio file in the computer,
• a portable storage medium (7),
• means for transferring the digitized and compressed audio file from the computer (3) to the portable storage medium (7),
• a cellular telephone (2) connectable to at least one sound reproducing unit (10), and
• an accessory device (8) connectable to the cellular telephone (2) and comprising
• means for inserting the portable storage medium (7),
• means for decompressing the digitized and compressed audio file,
• means for playing back the decompressed audio file as audibly perceptible signals via the sound reproducing unit (10), and
• means for reducing during telephone calls the sound level of the audibly perceptible signals which are played back from said audio file, and using the sound reproducing unit (10) for the telephone conversation.

11. An accessory device (8) for use in connection with a cellular telephone (2) connectable to at least one sound reproducing unit (10) for playback of audio signals, comprising:
• means for inserting a portable storage medium (7) on which a digitized and compressed audio file is stored,
• means for decompressing the digitized and compressed audio file,
• means for playing back the decompressed audio file as audibly perceptible signals via the sound reproducing unit (10), and
• means for reducing during telephone calls the sound level of the audibly perceptible signals which are played back from said audio file, and using the sound reproducing unit (10) for the telephone conversation.
